Europäisches Patentamt

European Patent Office

Office européen des brevets

(19)

(11) Publication number: 0 375 900

A2

## (12) EUROPEAN PATENT APPLICATION

(21) Application number: 89120836.5

(22) Date of filing: 10.11.89

(51) Int. Cl.5: G06F 13/12, G06F 13/36

(30) Priority: 29.12.88 US 291543

(43) Date of publication of application:
04.07.90 Bulletin 90/27

(84) Designated Contracting States:
DE FR GB

(71) Applicant: International Business Machines
Corporation
Old Orchard Road
Armonk, N.Y. 10504(US)

(72) Inventor: Hanrahan, Donald J.
931 Byford Boulevard
Endwell New York 13760(US)
Inventor: Morehead, Bruce J.
112 Andrews Avenue
Endicott New York 13760(US)
Inventor: Shippy, David J.
291 Hillside Terrace
Endwell New York 13760(US)

(74) Representative: Rudolph, Wolfgang, Dipl.-Ing.
IBM Deutschland GmbH Schönaicher
Strasse 220
D-7030 Böblingen(DE)

(54) Computer system.

(57) A message buffer in an I/O subsystem allows
asynchronous buffering of messages between I/O
processors which control I/O devices and an I/O
control processor, which executes issued I/O instruc-
tions. The message buffer is located in the I/O
control processor, thereby avoiding a lengthy mes-
sage path through the main storage of a main pro-
cessor served by the I/O system.

FIG. 2

EP 0 375 900 A2

## COMPUTER SYSTEM

This invention is in the field of computer systems according to the preamble of claim 1.

The handling of I/O instructions in data processing systems entails a significant amount of overhead. Particularly, I/O instruction processing includes the following support functions: establishing connection between the system and I/O device, maintaining a status between the system and the device, and concluding an I/O operation. Previously, this processing has been performed by the central processing unit (CPU) of a main processor. Recently, proposals have been made and implementations have been realized for use of intelligent programmed controllers located between a host processor main storage in the I/O devices to assist in the transfer of data. However, in all prior art and proposed arrangements, the CPU is still responsible for dispatching work, maintaining control blocks associated with work dispatched to each I/O device, and determining final status of each I/O instruction. Although much of the work of executing an I/O instruction is given to an I/O controller, communication is still required between controllers and the CPU. Such communication typically involves providing the CPU with a mechanism for directly accessing registers within an I/O controller for reading or writing information, or provision of a mechanism through which messages are exchanged between the CPU and the controllers. As is known, the first method, direct register access, is slow. The second method typically locates a message buffer in main storage, requiring a controller to send a message to the buffer and then requiring the CPU to extract the message from the main storage buffer. As is known, main storage access is time-consuming and requires allocation of a certain percentage of the main storage access bandwidth for this purpose.

In spite of the drawbacks of main storage access, the second method of exchanging information between a CPU and a I/O controller is preferred for its potential speed, and for its efficient use of resources. Therefore, an evident need exists to provide for such a capability through a buffer in a location outside of main storage, which can be efficiently and quickly accessed by the main processing unit of a computer and by the I/O controllers.

The object of this invention is therefore to provide a message buffer facility outside of main storage through which messages containing control information can be staged for exchange between a CPU and a plurality of I/O devices of a computer system.

The solution is described in the characterizing part of claims 1 and 7.

Attainment of this objective and enjoyment of other significant advantages by practice of this invention will become evident when the following description is read with reference to the below-described drawings.

This need is satisfied in a computer system including a CPU, a main storage connected to the CPU, and an I/O system for transferring data between main storage and a plurality of I/O devices, where the I/O system includes a layer of control functionality in the form of an I/O control processor (IOCP) logically interposed between the CPU and a plurality of I/O processors (IOPs). In the I/O system, the IOCP receives I/O instructions from the CPU for execution, while a plurality of IOPs transfer data between the main storage and the I/O devices during I/O instruction execution. The I/O system further includes a shared bus connecting the IOCP to IOPs for exchange of interrupt, status, and control information relating to I/O instruction execution, the interrupt, status, and control information being in the form of messages. In this context, the invention is a message buffer system which supports message exchange between the IOCP and the IOPs on the shared bus, the system including a message buffer, located in the IOCP, which supports message exchange between the CPU and the IOCP, wherein the messages are those which, in the prior art, were buffered in the main storage buffer.

The invention includes a bus arbiter connected to the IOCP for granting bus access to transfer messages. A message buffer toggle circuit is connected to the bus arbiter for providing a toggle signal conditioned to indicate whether or not one of the IOPs has been granted bus access for message transfer between an IOP and the IOCP. The message buffer includes an addressable message storage resource. An address pointer is provided for holding a value corresponding to a load address of the addressable message storage resource. An IOP message bus control circuit is connected to the bus, to the arbiter, to the address storage resource, and to the address pointer and responds to a grant of bus access for message transfer by entering an IOP message placed on the bus into the addressable storage resource at the load address. An IOCP message controller is connected to the toggle circuit and to the addressable storage resource for extracting messages from or entering messages into a storage location other than the load address when the toggle circuit indicates that the bus is not being used for message transfer. A pointer switching mechanism connected to the message pointer and to the IOCP message controller changes the value in the message pointer when the IOCP controller enters messages into or extracts messages from the addressable storage resource.

Location of the message buffer in the IOCP provides buffered message communication between the CPU and the IOPs which is more rapid and efficient than through main storage. The IOCP is the representative of the CPU to the IOPs. The specific structure of the message buffer just summarized represents a shared resource for use of which the IOCP and IOPs contend, with the contention being resolved in a manner which eliminates the need for any synchronous exchange between the IOCP and the IOPs.

Fig. 1 illustrates the path by which control messages are exchanged between the CPU and a plurality of IOPs in the prior art.

Fig. 2 illustrates the location of the message buffer through which the messages of Fig. 1 are staged according to the invention.

Fig. 3 illustrates the essential structural elements of an I/O control processor (IOCP) through which I/O control messages are buffered.

Figs. 4A and 4B illustrate formats of a bus message operation command and IOCP microcode commands, respectively.

Fig. 5 is a circuit diagram illustrating the message buffer of this invention.

Fig. 6 is a process flow diagram indicating a sequence of operations which result in placing a message from an IOP into the buffer of Fig. 5.

Figs. 7-9 illustrate operational sequences for sending messages to IOPs from the message buffer of Fig. 4, reading or writing messages from or to the buffer of Fig. 4, and changing the location into which IOP-originated messages are written in the buffer of Fig. 5.

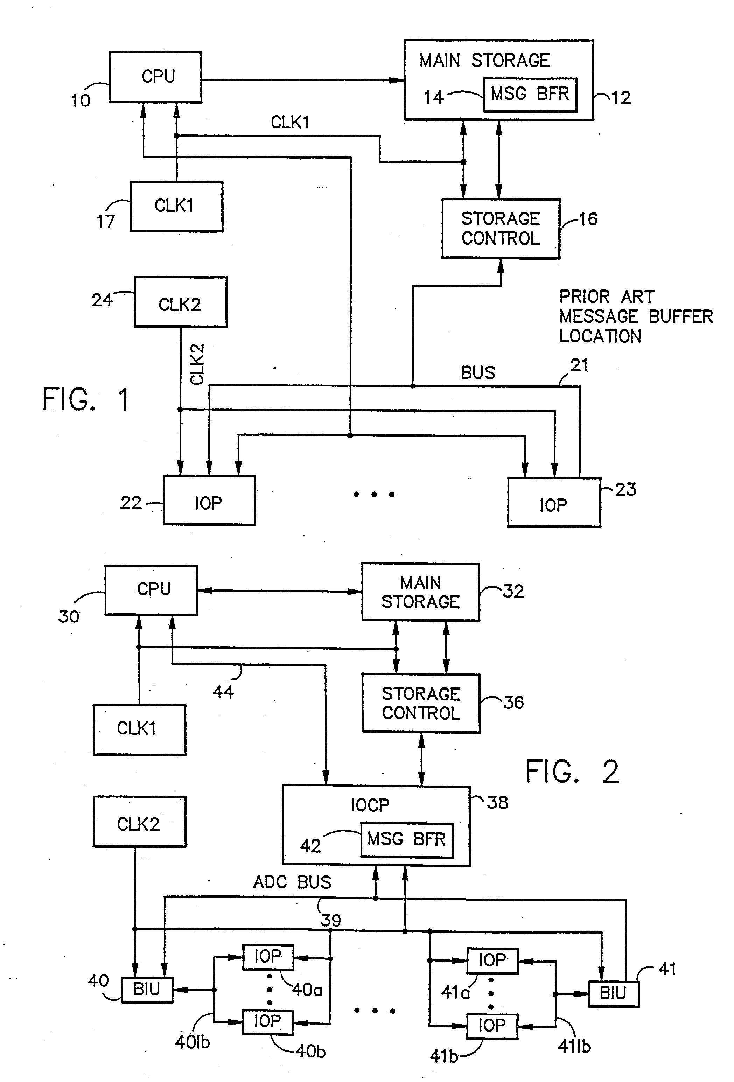

In the class of computers exemplified by IBM's System/370 mid-range processors of the 9370 series, IOPs communicate with a CPU by way of messages. The messages are conducted on a bus to which the IOPs are attached. Messages sent to the CPU from the IOPs are termed "receive" messages, while those sent to the IOPs by the CPU are "send" messages. Messages are buffered through a message buffer in a main storage. In this regard, Fig. 1 illustrates the location of the message buffer as being in a computer system having a main processor consisting of a CPU 10, main storage 12, storage access control unit 16, and a clock source 17. The CPU 10 receives and issues software-level I/O instructions for transfer of data between an I/O device and main storage 12. Access to the main storage 12 is through the storage control unit 16. The functions of the main processor unit are synchronized by provision of a clock signal CLK 1 from the clock source 17. Getting information to and from a peripheral device is the responsibility of an I/O system including a plurality of IOPs, two of which are indicated by references numerals 22 and 23. The IOPs are connected to a common bus 21 and their operations are synchronized by provision of a second clock signal CLK 2 from an I/O system clock source 24. In the prior art of Fig. 1, a message buffer 14 is located in main storage 12. In this prior art location, the path to the message buffer from the IOP level of the I/O system is:

IOP - STC - Main Storage

After messages have been stored in the message buffer 14, the CPU fetches and interprets them and responds with the appropirate action.

Refer now to Fig. 2 for the relocation of the message buffer according to the invention. In the invention, the main processor is represented by CPU 30, main storage 32, and storage controller 36, connected in a configuration typical of the prior art. In addition, the I/O subsystem corresponds with that illustrated in Fig. 1 in that it contains a common bus 39 and a plurality of IOPs. There is also the addition of a centralized I/O control processor (IOCP) that is used to offload a large portion of the I/O system control function from the CPU. The IOCP handles all software level I/O instructions and controls the flow of information between the I/O devices (not illustrated) that are served by the IOPs and main storage 32.

The IOCP is connected by the common bus 39 to a plurality of IOPs through bus interface units (BIUs) 40 and 41. Each BIU provides access to the common bus 39 for IOPs which are served by the BIU. Thus, the BIU 40 is the interface to the common bus 39 for IOPs 40a, 40b; the BIU 40 is linked to IOPs 40a, 40b by a local bi-directional bus 401b. Similarly, the BIU is connected to IOPs 41a, 41b by a local bus 411b to interface those IOPs to the common bus 31. The local busses 401b and 411b are arbitrated by means not shown. Whenever an IOP is granted a local bus, it has exclusive control of the bus and the connected BIU; the IOP has control of the local bus and IOIC for message transfer with the IOCP on the common bus bus 39, reference hereinafter will be made to message exchange "on the common bus 39," it being understood that the IOP is connected, through its local bus and BIU, to the common bus.

Fig. 2 also illustrates a message buffer 42 for the temporary storage of send and receive messages and synchronization of message exchange between IOPs and the CPU; this message buffer is located in the IOCP. Here, once the common bus is acquired, the message path between the buffer and an IOP is, simply: IOP-IOCP. Thus the STC/main storage path has been bypassed and the send and receive message are loaded directly into the message buffer 42. Given the capability of modern circuit technology, it is contemplated that the message buffer 42 can be accessed every 45 nanoseconds, compared to which the main storage access time would typically be at least four times greater.

For a further understanding of the context in which this invention is practiced, and still referring to Fig. 2, the IOCP 38 is attached to the CPU by way of a communication bus 44. This bus allows either processor (CPU or IOCP) to transfer interrupt and control information to the other. The IOCP is attached to the IOPs via a bus 39. The IOPs are intelligent microprocessor-based subsystems providing control of attached I/O devices. It is contemplated that the designer might provide multiple IOP subsystems, with each specific type of IOP dedicated to a particular category of I/O devices. Varying system I/O requirements would lead to different combinations of IOPs. It is further contemplated that IOPs can be connected directly to the common bus 39, instead of indirectly through a local bus and BIU. Yet, in the context of Fig. 2, there would be only one centralized IOCP per I/O system.

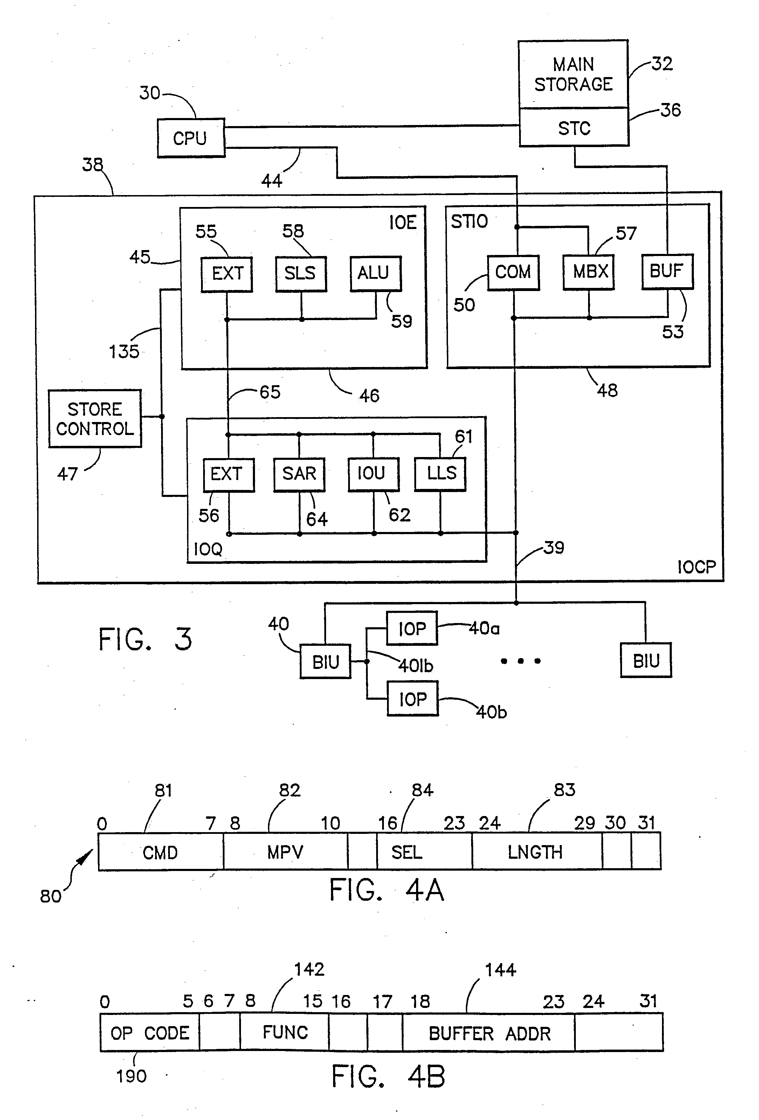

As illustrated in Fig. 3, the IOCP consists of an I/O engine (IOE) unit 45, an I/O queue (IOQ) unit 46, a control store 47 and a storage and I/O interface (STIO) unit 48. STIO 48 provides a central communication (COM) facility 50 and a mailbox (MBX) buffer 51 which allow the CPU and IOCP to communicate on the bus 44. STIO 48 also provides a data buffer (BUF) 53, for the passing of data between the I/O subsystem and main storage. IOE 45 and the IOQ 46 are the processor units of the IOCP 38. These units execute microcode instructions located in the control store 47. The control store 47 maintains the appropriate control program for use in connection with the IOCP 38. This program includes various routines needed to form the manifold functions and operations required of the IOCP 38.

The IOE 45 and IOQ 46 provide various temporary storage areas used by the control program. Each contains external registers (EXT) 55 and 56 respectively, used for control, status, and interrupt information. The IOE 45 has a small local store (SLS) 58, which is a temporary store used for the manipulation of data and to support various arithmetic and logic operations performed by an arithmetic and logic unit (ALU) 59. IOQ 46 has a temporary storage area referred to as a large local store (LLS) 61, which is used by the IOCP control program. The LLS 61 also provides the addressable storage area for temporary storage of send and receive messages. An input/output interface unit (IOU) 62 has registers for storing control and status information regarding messages buffered in the LLS 61. IOQ 46 also has a storage address (SAR) buffer area 64 which is used by the microcode to set up main storage address pointers used during storage microwords.

Together, the IOE 45 and IOQ 46 execute microwords located in the control store 47. Each receives a multi-byte microword in parallel from the control store 47. However, one or both of these units executes the microword, depending upon the specific microword. The IOE 45 executes arithmetic and logic microwords, while the IOQ 46 executes the microwords which interface with units outside the IOCP, for example, the IOPs, the CPU and main storage. These microwords divide naturally into two categories: storage microwords and processor bus operation (PBO) microwords. The storage microwords interface with facilities in the STIO 48 and in main storage. PBO microwords provide the capability to load and copy registers at the IOP level, and also to transmit send message commands to the IOPs. Last, a class of microwords consists of operations which move data between the IOE 45 and IOQ 46 by way of microcode databus 65.

The procedure by which the CPU 30 establishes connection with, and carries on communications with an I/O device attached to an IOP requires the CPU to fetch and interpret software-level instructions. If an instruction is an I/O instruction, control is passed to the IOCP in the form of a message by way of the COM 50 and MBX 51 in the STIO 48. The I/O instruction can consist of any type of start, clear, halt, or suspend function for a specified I/O device.

IOCP 38 begins processing the instruction by fetching control information blocks located in main storage 32 which it moves to the LLS 61 through the STIO BUF 53. Using control block information, the IOCP 38 forms a send message for the identified IOP in SLS 58. When the send message is completed, it is moved on the microcode databus 65 to the message buffer in the LLS 61. The IOCP 38 then sends the message to the IOP in the form of a send message. IOCP 38 then waits for two receive messages from the IOP. The IOCP is notified of the incoming message by the setting of an external interrupt summary register (EIS), described below. The first receive message consists of the I/O device's present condition code and indicates that the device has received the instruction and will proceed with execution. After the initial receive message is taken in from the IOP, the IOCP 38 is free to receive and execute another software-level instruction.

Upon receiving the PBO send message from the IOCP 38, the identified I/O device, with assistance from its associated IOP, undertakes to transfer specified data between main storage and the device. When this is completed, the IOP produces the second receive message. The IOCP 38 is again notified of the incoming message by the setting of an EIS interrupt; the second receive message contains the termination status of the specified I/O operation. Upon receiving this message, the IOCP 38 returns the I/O operation status to the CPU on the bus 44.

In this message handling scheme, the message buffer of the invention, located in the LLS 61, is shared by the IOCP 38 and the IOPs. It is not evident to these processors that they are contending for a shared resource, namely, the message buffer.

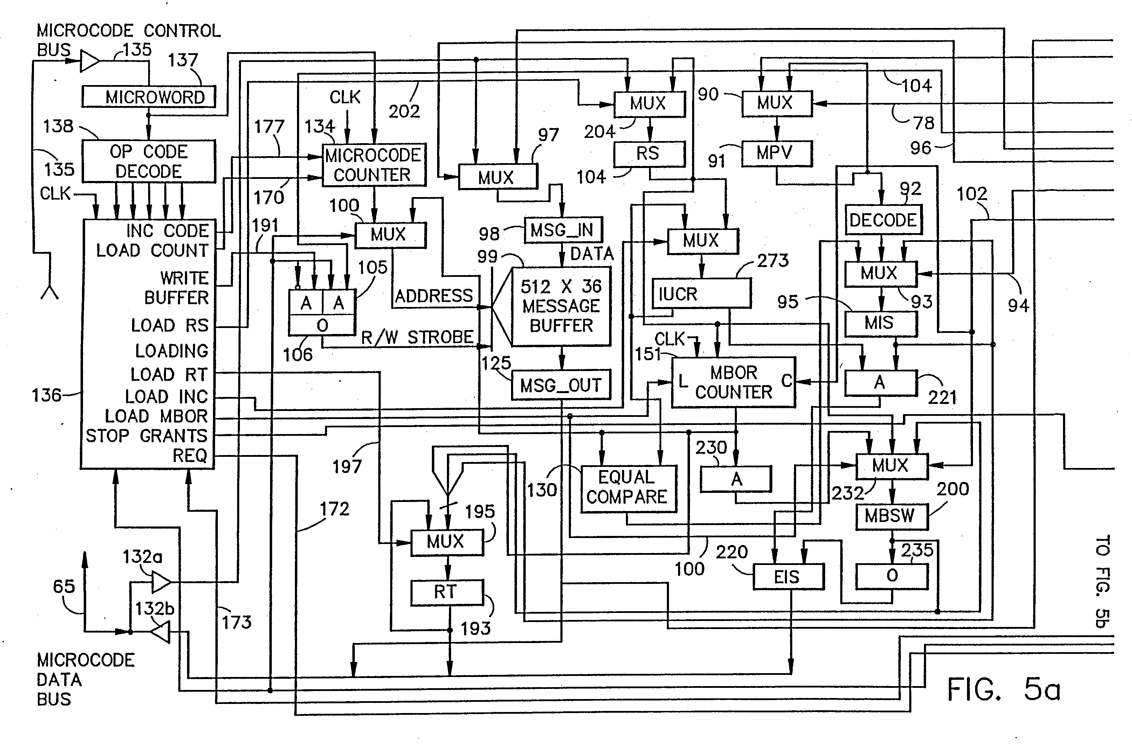

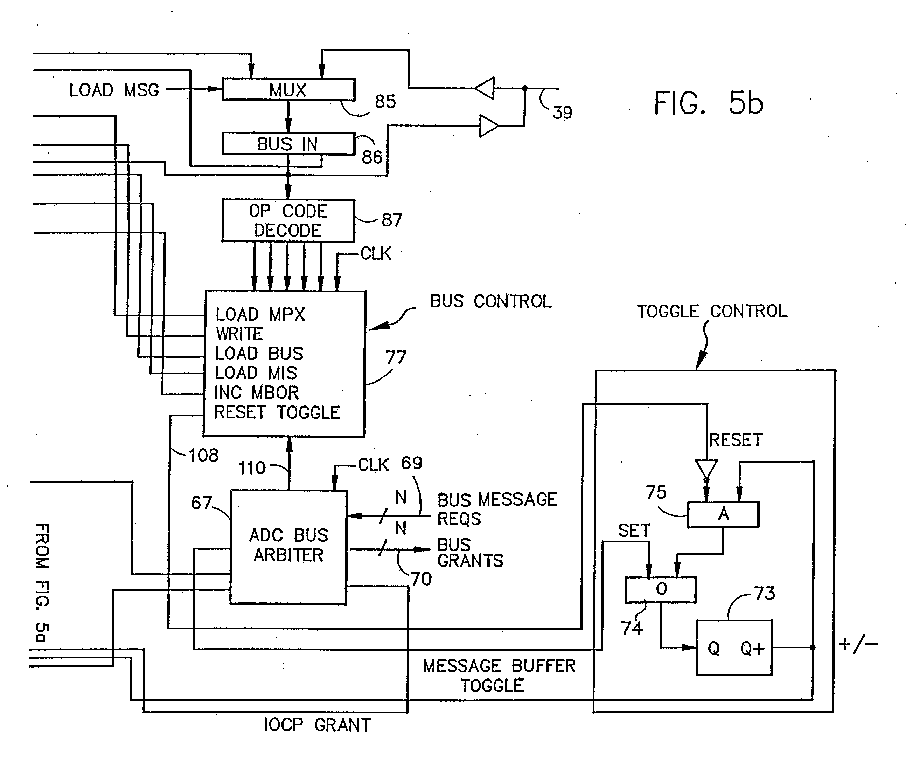

Referring now to Fig. 5, the message buffer 42 is illustrated in detail, and in combination with a bus arbiter 67. It is asserted that bus 39 is an arbitrated bus in that access to it is granted by the arbiter 67 only upon receipt of an access request. Thus each of the BIUs is connected to the arbiter 67 by way of an individual one of N request lines 69. It is further asserted that there are actually two sets of request lines, only one of which is illustrated. The request line set which is not illustrated conducts requests for bus use not involving message transfer. On the other hand, requests received on the lines 69 are for the specific purpose of acquiring access to the bus for transferring a message to the buffer. A grant of access to the bus is indicated on one of N bus grant lines 70.

Included in the message buffer is a toggle control circuit 72 including a latch 73, an OR gate 74, and an AND gate 75. The toggle control circuit 72 is intended to provide an indication (MESSAGE BUFFER TOGGLE) whenever a bus grant has been made on one of the lines 70 in response to a message request received on one of the lines 69. The toggle circuit 72 essentially indicates when a message has been, or will be, placed on the bus 39 for entry into the message buffer. When the message has been received and entered, the MESSAGE BUFFER TOGGLE signal is reset. In operation, the arbiter 67 produces a signal SET on signal line 76 whenever a bus grant has been made in response to a message request. The SET signal is provided to the OR gate 74 together with the output of the AND gate 75. The AND gate combines the output of the latch 73 with the inverted representation of a signal, RESET. The RESET signal is inactive until the message causing the activation of the SET signal has been entered into the buffer. Thus, when a message request is granted, the SET signal rises, setting the latch 73. Since the set signal is preferably a pulse, the latch 73 is maintained in its SET state by the output of the AND gate 75, which combines the positive output of the latch with the inverted sense of the inactive RESET signal. When the message causing the setting of the latch 73 has been entered into the buffer, the RESET signal activates, causing the output of the AND gate 75 to fall, thereby resetting the latch 73. When the latch is set, the MESSAGE BUFFER TOGGLE signal is activated; when reset, the signal is inactivated.

An IOP message bus control circuit 77, comprising conventional digital logic, controls the transfer of a receive message from the bus 39 into the buffer. The control circuit 77 responds to a conventional clock signal CLK and to the decoding of a command field (CMD) of a bus message operation command having the format of Fig. 4A. In this regard, when an IOP receives bus access for message transfer, it transmits up to a four-word frame, in which the first word is a bus message operation command including control information relative to the receive message which is to follow the command. The receive message can include from two to three words of 32 bits each. The bus message command (Fig. 4A) includes a first field 81 which stores the command code, a second field 82, storing a three-bit message priority value (MPV), and a field 83 indicating the length of the message to follow. The CMD field 81 indicates that a message will follow having a length given in the field 83 and a priority given in the field 82. The SEL field 84 indicates which bus unit sent the message and which bus unit should receive the message. The MPV field 82 has one of eight values, one of those values indicating that the following receive message is one of the two receive messages responsive to a prior send message. The priority is one which will elicit an immediate response from the IOCP.

From the bus 39, the command is routed through multiplexer 85 to a register 86 whence it is provided to an OPcode decoder 87. The decoder 87 operates conventionally to decode the command field 81 in order to provide a set of control signals to the bus control circuit 77. In response to a receive message decode, bus control circuit 77 loads the MPV code from the MPV field of the command, then writes the message into the buffer.

To load the MPV field, the bus control unit 77 activates a LOAD MPV signal on signal line 78, which operates a multiplexer 90 to load the MPV field of the bus with a message operation command from the register 86 into the register 91. The priority is decoded in a decode circuit 92 and loaded through a multiplexer 93 in response to a LOAD MIS signal activated by the bus control circuit 77 on line 94, with the loading destination being message interrupt summary (MIS) register 95.

Next the bus control circuit 77 operates to write the message into the buffer at a predetermined storage location. In this regard, a LOAD BUS signal is activated on signal line 96, which configures the multiplexer 97 to transfer a message word from the register 86 to the message in (MSG IN) register 98. From the register 98, the message word is entered into an addressed location in a portion of the LLS 61 which is designated as the message buffer 99.

The message buffer address to which the word in the register 98 is written is provided through a multiplexer 100. During a receive message operation, the MESSAGE BUFFER TOGGLE signal configures the multiplexer 100 to provide the message buffer address from a message buffer offset counter 101. For each word entered, the contents of the counter 101 are incremented by provision of an increment MBOR (INC MBOR) signal on signal line 102. This signal is pulsed once for each word in the receive message, providing a message buffer address sequence which stores the receive message in up to three contiguous message locations in the buffer 99.

The buffer 99 is conventionally controlled by a read/write signal (R/W STROBE). During storage of a receive message in the buffer 99, the strobe is provided as a WRITE signal by the bus control circuit 77 on signal line 104. The WRITE strobe from the control circuit 77 is received at a conventional AND/OR gate combination 105/106. The bus control circuit WRITE signal is provided to the right-hand one of the two AND gates 105, together with the MESSAGE BUFFER TOGGLE signal, causing the output of the gate to strobe, the strobe being passed by the OR gate 106 as the R/W STROBE signal to the buffer 99. When the R/W STROBE signal is activated, the message word in the register 98 is entered into the buffer 99 at the address location provided through the multiplexer 100 from the MBOR counter 101.

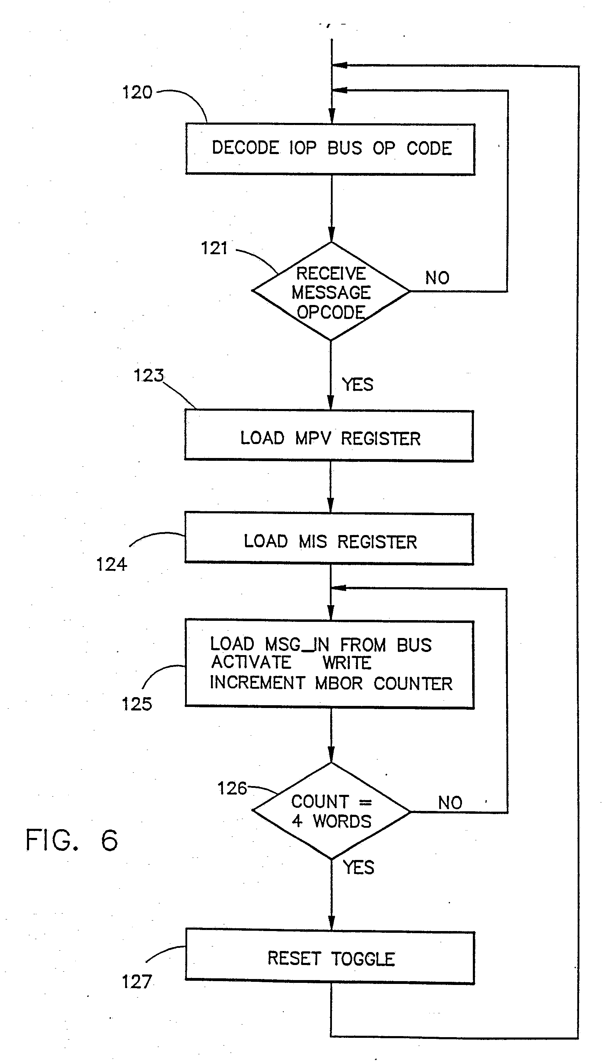

Reference to Fig. 6 will provide an understanding of the sequence in which the just-described operations occur. Immediately after a bus grant is made in response to a bus message request, the bus arbiter 67 provides a command signal on signal line 110. In response to this signal, the bus control unit inspects the output of decoder 87, as represented by step 120. In step 121, the bus control circuit operations are suspended in a ready state until the OP code is decoded. In steps 123 and 124, the LOAD MPV and LOAD MIS signals are provided, to lodge the MPV of the bus command in the register 95. The LOAD MPV and LOAD MIS signals are active only for the clock period during which the OP code decoding occurs. At the following clock period, the WRITE, LOAD BUS, and INC MBOR signals are all strobed for the number of clock periods in the loop 125-126-125 to write the words of the receive message in consecutive locations of buffer 99. The MBOR counter increments from its last count by the magnitude of one for each clock period occurring while the INC MBOR signal is active. At the last clock period, the three signals are inactivated and the RESET TOGGLE line 108 is pulsed for one clock period, causing the latch 73 to reset, thereby dropping the MESSAGE BUFFER TOGGLE signal.

After the corresponding control signal for the multiplexers 90, 93, 97, and 100 is deactivated, the multiplexers 90, 93, 97, and 100 assume default states. In this regard, multiplexer 90 circulates the contents of the MPV register 91, while the multiplexer 93 circulates the contents of the MIS register, together with the output of comparator 30 described later. The MBOR register/counter 101 is prevented from counting up. Multiplexer 97 selects its input from a receiver 132a connected to a microcode databus 65 explained below. Multiplexer 100 connects the output of a microcode counter 134 to the address port of the buffer 99. Last, the inactive state of the MESSAGE BUFFER TOGGLE signal activates the left-hand AND gate of the AND gate pair 105.

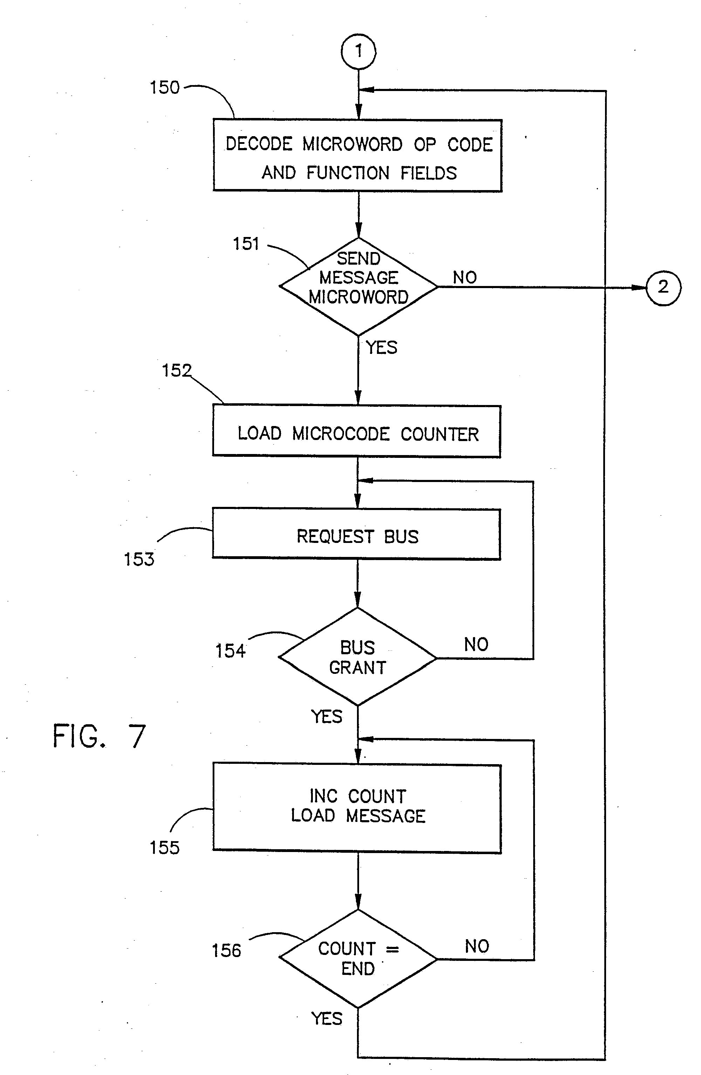

Refer now to Fig. 5 and Fig. 7 for an understanding of how send message are placed in the message buffer and transferred from the message buffer to the bus 39; the operational sequence by which receive messages are extracted from the buffer for processing will also be explained. Ultimately, a final status will be returned to the CPU by the IOCP based upon this processing.

This IOCP program includes microcode sequences in which microword commands relating to the buffer 99 are found. These microwords are transferred on a control bus 135. Each microword on the bus is entered into a microword register 137. Microcode commands relevant to message processing have the microword format illustrated in Fig. 4B. A microword includes an OP code (OP CODE) field 140, a function (FUNC) field and buffer address field 144. The OP code and FUNC fields are decoded by the decoder 138, which provides a set of control signal derived from these fields by a conventional decoding procedure.

Assume that the first microword decoded is a SEND MESSAGE microword, requiring provision of a send message to the databus 39. The microword decoding consists of decoding the OP code and FUNC fields of Figure 4B. These steps are embodied in steps 150 and 151 of the Fig. 7 operation flow. Assume that the SEND MESSAGE microword has been decoded; in this case, the BUFFER ADDR field 144 of the microword will contain the address of the first word of the send message. It is asserted that each SEND message includes four thirty-two bit words, each word placed on the bus 39 during a respective one of four succeeding cycles of the CLK signal. The four thirty-two bit words comprising a send message will have previously been loaded in four successive locations in the buffer 99. Microcode counter 134 is loaded with the first location where the first send message word is stored; it now must be incremented three times to address the three other words of the message. Thus, after the positive exit from the decision 151 of Fig. 7, microcode counter 134 is loaded from the buffer address field 144 of the microword in register 137 in response to the LOAD COUNT signal activated by the microcode control circuit 136 on signal line 170. Following loading of the counter 134, microcode control circuit 136 in operation step 153 raises a message request signal on line 172 which is passed to the arbiter 67, where it competes with IOP message requests for access to the bus 39. The control circuit 136 maintains the request signal in an active state until it receives an IOCP GRANT on signal line 173. When granted access to the bus 39, the microcode control circuit 136 then activates a load message (LOAD MSG) signal which causes the multiplexer 85 to select its input from a message out (MSG OUT) register 175. The input of the register 175 receives the word stored at the address provided to the buffer 99 when the R/W STROBE is in the READ state. In fact, the default state of the STROBE signal is the inactive output of the OR gate 106, which corresponds to the READ state of the STROBE. Thus when an address is presented to the address port of the buffer 99, the default state of the R/W STROBE signal results in the message at the current address being read from the buffer 99 and entered into the register 175. In step 155, the INC COUNT signal, output by the control circuit 136 on signal line 177 causes the microcode counter 134 to increment three times from its initial value, thereby resulting in the four successive words of the SEND message being transferred through the register 86 onto the bus 39. After four successive CLK cycles, the INC COUNT and LOAD MSG signals are deactivated, represented by the positive exit from decision 156.

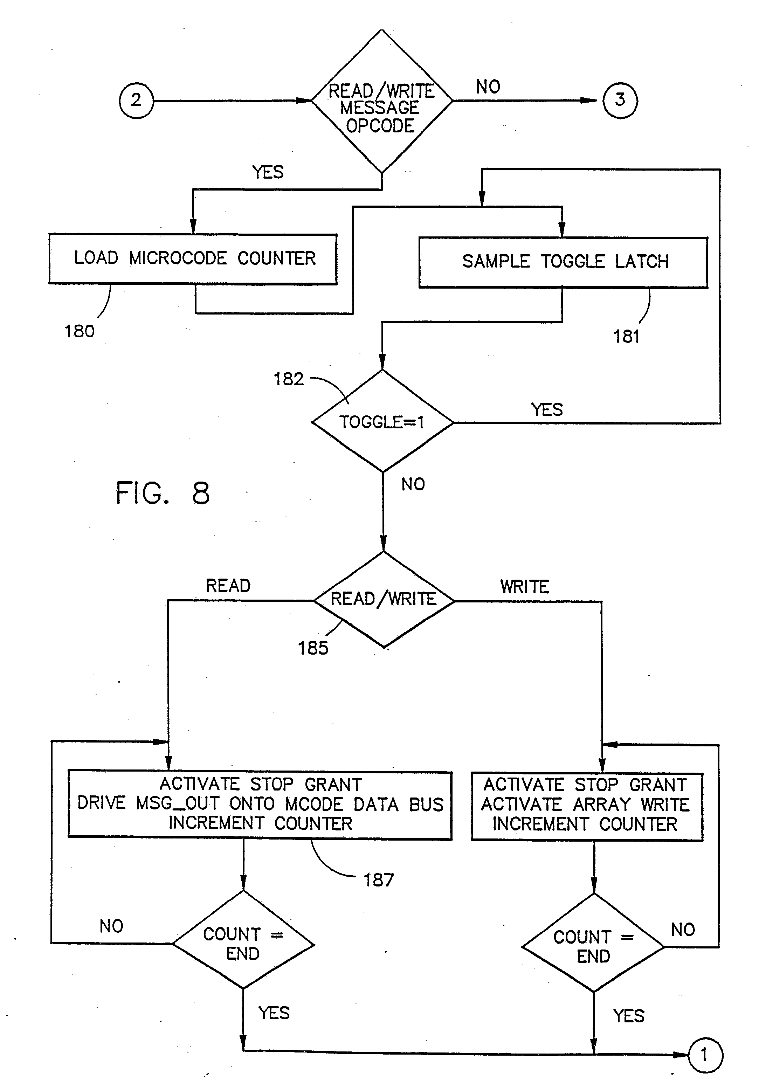

Assume now that the microword in the register 137 has an OP code for transferring a message between the buffer 99 and the microcode databus 131. If the message is to be transferred from the microcode databus, the command will be a WRITE microword, indicating that the message is to be written to the buffer 99. If, on the other hand, the message is to be extracted from the buffer 99, the microword is a READ microword. In either case, as Fig. 8 illustrates, the first step is to load the microcode counter 124 with the buffer storage location where the first word of the message is to be entered or found. This is step 180 in Fig. 8. In order to preserve the integrity of data in the buffer 99, the control circuit 136 then samples the MESSAGE BUFFER TOGGLE signal in the loop 181-182-181, until the signal is deactivated. This is to avoid providing concurrent access to message storage locations to an IOP and to the IOCP, which could result in corruption of data. When MESSAGE BUFFER TOGGLE signal is deactivated, one of the two exits from the decision 185 is taken, depending upon the code in the function field 142 of the microword. Assume now that the microword is a READ microword requiring the message to be moved from the buffer 99 onto the microcode databus 65 through the bus driver 132b. As procedure step 187 illustrates, a STOP GRANT signal is activated on signal line 190, which locks the arbiter 67, and prevents it from responding to any message requests received on any of the lines 69. Next, a multi-word message in the buffer 99 is driven out through the register 175 onto the microcode databus 65 in response to the original value in, and to successive incrementations of, the microcode counter 134. Following the last word, the INC COUNT signal and STOP GRANT signal are deactivated.

Assume that the microword is a WRITE microword requiring a multi-word message to be entered into the message buffer 99 from the microcode databus 65 through the bus receiver 132a. Again, the STOP GRANT signal is activated to prevent the arbiter 67 from granting an IOP access to the bus. Next, a WRITE BUFFER signal is activated on line 191, which is fed forward to put the R/W STROBE signal in a positive state by way of the left-hand AND gate 105 and the OR gate 106. The message is written through the multiplexer 97 and the register 98 into successive locations of the message buffer 99 indicated by the successive counts of the microcode counter 134. When the message words have been entered, the INC COUNT, STOP GRANT, and WRITE BUFFER signals are all deactivated.

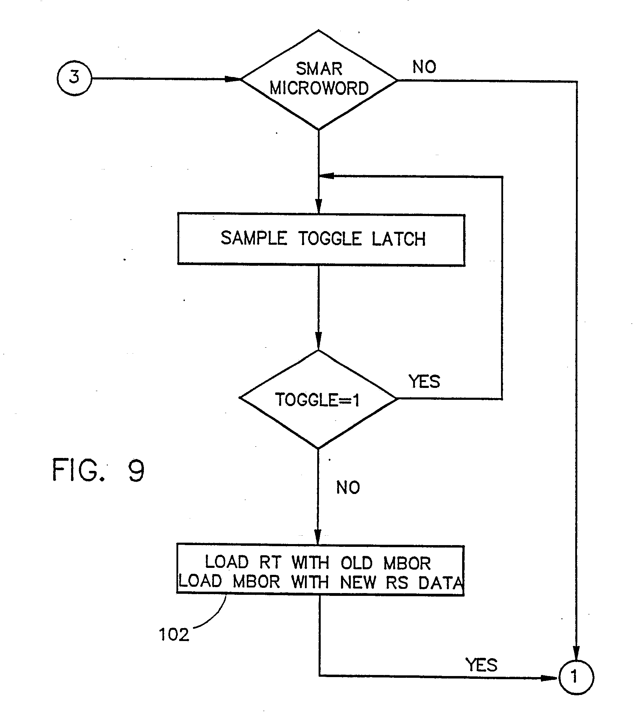

The last operational sequence of interest is that by which the MBOR counter is loaded with a new initial count. In Fig. 9, decoder 138 provides a set of signals indicating that the microword is a swap message acceptance register (SMAR) microword. In this case, the microword control circuit waits until the MESSAGE BUFFER TOGGLE signal is deactivated. When this condition is detected, the microcode control circuit operation sequence undertakes a procedure (represented by step 192) to capture the current contents of the MBOR counter 101 in an RT register 193 and to load a new value into the counter 101 by way of an RS register 194. This sequence is initiated by provision, first, of a LOAD RT signal on signal line 197 to a multiplexer 198. The LOAD RT signal causes the multiplexer to load the RT register 193 with the contents of the counter 101 in a first field of the register, the contents of an MBSW register 220 in a middle field of the RT register 193, and the contents of the MIS register 95 in a third field of the RT register 193. The RT register 193 is then read on a subsequent command by the IOCP microcode by way of the microcode databus 65. Following capture of the MBOR counter contents into the RT register 193. The LOAD RT signal is then dropped and the LOAD MBOR signal is raised, moving a new MBOR value from a respective field of the RS register 194 where the value is contained into the MBOR counter 101. The RS register 194 is loaded, prior to the SMAR routine, by a MOVE WORD instruction which loads the new MBOR value from the bus 65 when the LOAD RS signal is activated, which connects the bus 65 to the RS register through multiplexer 204.

The detailed description of the procedure by which the IOCP 38 establishes connection with, and carries on communications with an IOP is now described. The IOCP 38 begins processing of an I/O instruction by fetching control information blocks located in the main storage. The storage location desired is first loaded into the SAR 64 under control of microcode. The data is then moved from the main storage into the STIO BUF 53 and to the IOCP working area of the LLS 61. Using information from these control blocks, the IOCP forms a send message for the targeted IOP in the SLS 58. The ALU 59 assists this process by performing arithmetic and logic operations on the data. The microcode bus 65 transfers the completed message between the SLS 58 and the message buffer portion of the LLS 61. The IOCP 38 then sends the message to the IOCP in the form of a send message.

The send message is handled by the message buffer hardware of Fig. 5 as follows. The start of the send message is signalled by a decode of the operation code and the function field of the microword. If the operation is a send message, then the following sequence occurs. The microcode control circuit 136 loads the buffer address specified by the microword into the counter 134. The circuit 136 then requests use of the bus 39. When the grant is received from the arbiter 67, the circuit 136 loads a message onto the bus 39, the path 99-175-85-86, the message being gated, word-by-word on successive cycles of CLK. Each cycle that the buffer 99 is accessed, the microcode counter 134 is incremented. When the last word has been placed on the bus 39, the IOE 45 resumes fetching from control store 47.

The IOCP 38 then waits for a receive message from the targeted IOP. If the IOP is active, it returns a first receive message indicating that it has received I/O instruction and will proceed with execution. The IOCP 38 is notified of the incoming message by the setting of a bit in the external interrupt (EIS) register 220. The bit is set by way of a comparison of the contents of the MIS register 95 with a mask value in a mask (M) field of a register 223. The mask value and contents of the MIS register 95 are bitwise anded using AND gate 221. If bitwise AND is active, the output of the AND gate 221 is activated, setting the message interrupt bit in the EIS register 220. It will be evident that this bit is derived directly from a comparison of the decoded message priority value contained in the bus message operation command forming the first word of a receive message.

The EIS register 220 is polled until the response of receive message has been received on the bus 39. After this, the IOCP 38 is free to receive and execute another software-level I/O instruction. While the IOCP is not busy, it will periodically poll the EIS register; receive message bit to determine if any messages have been sent from an IOP. Later, when the targeted IOP has finished its operation, it will send a receive message indicating final status for that operation period. Meanwhile, the IOCP 38 continues to dispatch work to the IOPs asynchronously from the incoming receive messages.

The incoming receive messages are handled as described above in connection with Fig. 6.

When the IOCP 38 is ready to examine the contents of the buffer 99, data integrity is maintained by execution of a SMAR microword. By this operation, the IOCP swaps the MBOR value in the counter 101 with a value set up by microcode in the RS register 104. Thus, the IOCP gets the address of the last word in the receive message. From this point, it can extract the message. Simultaneously, the MBOR register/counter gets a new value pointing to a section of the buffer 99 which is currently unused. Thus, the IOP receive message entry will not corrupt the message of interest to the IOCP. While the IOCP 38 is interrogating the contents of messages at the MBOR location, receive messages can be received from the bus 39 at the new MBOR value.

Finally, a SMAR operation will also be initiated when MBOR count of a particular value has been achieved by the counter 101. In this regard, the most significant M bits of the MBOR counter 101 are collected in an AND gate 230. When the counter reaches the count at which all of these bits are set, the output of the AND gate 230 goes high. This output is selected by a multiplexer 232 in response to the INC MBOR signal being strobed on line 102. Thus, when the output of the AND gate 230 rises during an MBOR incrementation, a bit in the MBSW status register 200 is set, the bit being passed through the OR gate 235 to the EIS register 220, where it sets a MBOR FULL bit in the register. Since the register 220 is polled periodically, setting of the MBOR FULL bit will prompt execution of a SMAR microword, changing the MBOR initial count to correspond to a new sector of the buffer 99.

It should understood that modifications and adaptations of the described invention will occur to persons skilled in the art. Therefore, the protection afforded our invention should only be limited in accordance with the scope of the following claims.

## Claims

1. Computer system including a CPU, a main storage connected to the CPU, and an I/O system for transferring data between the main storage and a plurality of I/O devices, wherein the I/O system includes an I/O control processor (IOCP) which receives I/O instructions from the CPU for execution, a plurality of I/O processors (IOP's) for transferring data between the main storage and the I/O devices during I/O instruction execution, and a shared bus connecting the I/O control processor (IOCP) to I/O processors (IOP's) for exchange of interrupt, status, and control information relating the I/O instruction execution, said interrupt, status, and control information being in the form of messages, a message buffer system for supporting message exchange between the I/O control processor (IOCP) and I/O processors (IOP's) on the shared bus, characterized
by a bus arbiter for granting access to said shared bus to transfer messages;
by a message transfer toggle circuit connected to said bus arbiter for producing a toggle signal conditioned to a first state to indicate that said bus arbiter has granted access to said shared bus for message transfer and to a second state indicating that said bus arbiter has not granted access to said shared bus;
by an addressable storage resource;
by an address pointer for holding a value corresponding to a storage address in said addressable storage resource;
by an I/O processor (IOP) message bus control means connected to said shared bus, to said bus arbiter, to said addressable storage resource and to said address pointer and responsive to grant by said bus arbiter of access to said shared bus for the purpose of transferring a message from one of said I/O processors (IOP's), said I/O processor (IOP) message bus control means for entering a message placed on said bus by said I/O processor (IOP) into said addressable storage resource at said storage address; and
by I/O control processor (IOCP) message control means connected to said toggle circuit, and to said addressable storage resource for extracting messages from or entering message into a storage location in said addressable storage resource in response to said second state of said toggle signal;
by said I/O control processor (IOCP) message control means including pointer switching means connected to said message pointer for changing said value in said pointer when said I/O control processor (IOCP) control means enters messages into or extracts messages from said addressable storage resource.

2. Computer system of claim 1, characterized by means connected to said shared bus, to said I/O control processor (IOCP) message control means, and to said addressable storage resource for moving a message from said addressable storage resource to said shared bus for transmission to one of said plurality of I/O processors (IOP's).

3. Computer system of claim 1, characterized by interrupt indication means connected to said shared bus and responsive to a message on said shared bus for generating an interrupt indication signifying entry of said message into said addressable storage resource.

4. Computer system of claim 1, characterized in
that a message on said shared bus is a message generated by an I/O processor (IOP), said message including priority information, said I/O control processor (IOCP) periodically polling for message priority information,
that said message buffer system further including an interrupt decoder connected to said shared bus for providing said priority information to said I/O control processor (IOCP) in response to said polling.

5. Computer system of claim 1 or 4, characterized
by means in said I/O control processor (IOCP) responsive to said first state of said toggle signal for preventing said I/O control processor (IOCP) from entering messages into or extracting messages from said addressable storage resource.

6. Computer system of claim 1, 2 or 4, characterized in
that said I/O processor (IOP) message bus control means is further for incrementing said value in said address pointer each time said I/O processor (IOP) message bus control means enters a message in said addressable storage resource,
that said message buffer system further includes means connected to said address pointer and responsive to a certain storage address for changing said value.

7. Computer system of one of the claims 1 - 6, characterized
by an arbiter circuit for placing a first signal in a first state denoting grant of said bus for message transfer and in a second state denoting availability of said bus for message transfer;

by a message transfer toggle circuit connected to said arbiter circuit for providing a toggle signal in a first state indicating said allocation and in a second state indicating said availability;

by a message storage device having a plurality of storage locations, each of said plurality of storage locations having an address;

by a pointer for storing an address;

by means connecting said pointer to said message storage device for providing said address to said message storage device;

by bus control means connected to said bus, to said arbiter circuit, to said message storage device, and to said pointer for entering a message into said message storage device by incrementing said address in response to said first state of said first signal;

by message control means connected to said message transfer toggle circuit and to said message storage device for reading messages from, and writing messages to, said message storage device in response to said second state of said toggle signal;

by a pointer switch controlled by said message control means and connected to said pointer for entering an address in said pointer in response to said second state of said toggle signal; and

by means in said message control means for preventing said message control means reading messages from, or writing messages to, said message storage device in response to said first state of said toggle signal.

8. Computer system of claim 7, characterized by a message buffer including means connected to said bus, to said message control means, and to said message storage device for moving a message from said message storage device to said bus for transmission to said any one of said first users.

9. Computer system of claim 7, characterized by the message buffer including interrupt indication means connected to said bus and to said bus control means and responsive to said message for generating an interrupt indication signifying entry of said message into said message storage device, wherein said message is a message generated by said any one of said first users, said message including priority information, said message control means periodically polling for message priority information, said message buffer further including an interrupt decoder connected to said bus for providing said priority information to said message control means in response to said polling.

10. Computer system of claim 7, characterized by the message buffer including means in said message control means responsive to said first state of said toggle signal for preventing said message control means from entering messages into, or extracting messages from, said message storage device.

FIG. 1

PRIOR ART
MESSAGE BUFFER
LOCATION

FIG. 2

IBM — EN 988 013

FIG. 3

FIG. 4A

FIG. 4B

IBM — EN 988 013

FIG. 5a

FIG. 5b

120 — DECODE IOP BUS OP CODE

121 — RECEIVE MESSAGE OPCODE — NO

YES

123 — LOAD MPV REGISTER

LOAD MIS REGISTER — 124

LOAD MSG_IN FROM BUS
ACTIVATE    WRITE
INCREMENT MBOR COUNTER

125

126 — COUNT = 4 WORDS — NO

FIG. 6

YES

RESET TOGGLE

127

FIG. 7

FIG. 8

FIG. 9